# EUROPÄISCHE PATENTSCHRIFT

(11) **EP 0 561 762 B1**
(45) Veröffentlichungstag und Bekanntmachung des Hinweises auf die Patenterteilung: **18.09.1996**
(21) Anmeldenummer: 93890029.7
(22) Anmeldetag: 26.02.1993
(51) Int. Cl.: B60B 21/12

(54) **Felgenband**
Tire-flap
Bande de fond de jante

(30) Priorität: 17.03.1992 AT 535/92
(43) Veröffentlichungstag der Anmeldung: 22.09.1993
(73) Patentinhaber: Semperit Reifen Aktiengesellschaft, A-2514 Traiskirchen (AT)
(72) Erfinder: Fuhrmann, Erich, A-2500 Baden (AT)
(74) Vertreter: Vinazzer, Edith, Dipl.-Ing.

(56) Entgegenhaltungen:
- DE-C- 877 410
- FR-A- 616 095
- GB-A- 235 137
- US-A- 1 585 942

## Beschreibung

Die Erfindung betrifft ein Felgenband für einen Fahrzeugreifen mit einem Luftschlauch, das zum Schutz des Luftschlauches zwischen diesem und dem Wulstbereich des Reifens bzw. zwischen Schlauch und Felge anbringbar ist und welches, mit Ausnahme des die Öffnung zur Aufnahme des Ventilschaftes aufweisendes Bandsegmentes, wo eine Verstärkung vorgesehen ist, ausschließlich aus unverstärktem Elastomer- bzw. Gummimaterial besteht.

Felgenbänder werden im allgemeinen bei Lkw-Reifen und Zweiradreifen (Fahrradreifen) verwendet. Das Felgenband ist im Rad zwischen Felge, Schlauch und Reifen eingebettet und dient dazu, den Luftschlauch vor Beschädigung zu schützen. Bei hohen Reifendrücken bzw. Belastungen besteht z. B. die Gefahr, daß Teile des Felgenbandes und sogar der Schlauch selbst durch die den Ventilschaft aufnehmende Öffnung der Reifenfelge hindurchgedrückt werden. Schlauchverletzungen sind die Folge.

Bekannte Felgenbänder, die dem Oberbegriff des Anspruches 1 entsprechen, sind im Bereich der Öffnung zum Aufnehmen des Ventilschaftes durch Fäden bzw. Fasern verstärkt, indem ein zweidimensionales Kreuzgewebe aus diesen Fäden in den genannten Bereich eingebracht wird. Beim Gewebe handelt es sich um ein aufvulkanisiertes Kreuzgewebe aus gummierten Nylon- oder Rayonfasern in regelmäßiger Anordnung. Zusätzlich ist das Ventilloch fallweise mit einer Metallhülse verstärkt. Diese Anordnung ist technisch gesehen aufwendig und verursacht auch entsprechende Kosten.

Aus der US-A 1,585,942 ist weiters ein mehrlagiges Felgenband bekannt, welches aus einem mit Fasern verstärkten Gummiband besteht, welches beidseitig durch je ein weiteres Gummiband, welches gewebeverstärkt ist, abgedeckt ist. Der Bereich der Öffnung zur Aufnahme des Ventilschaftes eines Ventils ist nicht gesondert verstärkt. Auch dieses bekannte Felgenband ist konstruktiv aufwendig gestaltet und erfordert auch eine aufwendige Herstellung.

Hier setzt nun die Erfindung ein, die es sich zum Ziel gesetzt hat, das oben genannte Problem auf technisch einfache Weise zu lösen.

Das erfindungsgemäße Felgenband ist dadurch gekennzeichnet, daß das die Öffnung zur Aufnahme des Ventilschaftes aufweisende Bandsegment entweder zur Gänze aus einer mit geschnittenen Korden, Fasern oder Fäden, insbesondere gummierten Rayon- und/oder Nylonfäden, verstärkten Gummimischung besteht oder einseitig mit einer die Öffnung zur Aufnahme des Ventilschaftes umschließenden Schicht aus einer solchen Gummimischung versehen ist.

Es hat sich gezeigt, daß es zur Lösung der oben genannten Aufgabe nicht notwendig ist, daß die Fäden im Felgenband als Gewebe vorliegen.

Besonders bewährt haben sich Korde, Fasern oder Fäden, die eine Länge zwischen 5 mm und 20 mm und einen Durchmesser zwischen 0,01 mm und 1.0 mm aufweisen. Diese Faserschnitzel fallen vorteilhafterweise bei der Reifenproduktion an.

Eine weitere vorteilhafte Gestaltung des erfindungsgemäßen Felgenbandes ist dadurch gekennzeichnet, daß die geschnittenen Korde, Fasern oder Fäden zumindest teilweise in gerichtetem Zustand vorliegen. Im verstärkten Bereich können die Fäden zwischen 10 und 50 Masseprozent, bezogen auf die Gesamtmasse der Gummimischung, vorliegen, wobei der verstärkte Bereich am besten zwischen 2 und 8 % des gesamten Umfanges des Felgenbandes ausmacht.

Eine weitere bevorzugte Ausführungsform des erfindungsgemäßen Felgenbandes ist dadurch gekennzeichnet, daß der mit Korden, Fasern oder Fäden verstärkte Bereich eine Dicke aufweist, welche bis zum 1,5-fachen der übrigen Felgenbanddicke beträgt.

Der verstärkte Bereich kann zweischichtig aufgebaut sein, wobei jene der Felge näher liegende Schicht mit Korden, Fasern oder Fäden verstärkt ist.

Die Erfindung betrifft weiters ein Verfahren zur Herstellung des Felgenbandes, wobei eine Kautschuk-Rohmischung zu einem Band extrudiert wird und die beiden Enden dieses Bandes über ein bandförmiges Segment, welches ebenfalls aus einer Kautschuk-Rohmischung besteht und mit Korden, Fasern oder Fäden versehen ist, unter Vulkanisierung und Formgebung verbunden werden. Bevorzugt wird ein bandförmiges Segment eingesetzt, in welchem die Fäden in gerichtetem Zustand vorliegen.

Eine bevorzugte Variante des erfindungsgemäßen Verfahrens besteht darin, daß ein unvulkanisierter Felgenbandrohling im Bereich des Ventilloches mit einer Platte aus einer Kautschuk-Rohmischung, welche mit Korden, Fasern oder Fäden verstärkt ist, abgedeckt und unter Vulkanisierung und Formgebung mit der Platte verbunden wird, wobei bevorzugt eine Platte eingesetzt wird, in welcher die Korde, Fasern oder Fäden in gerichtetem Zustand vorliegen.

Nachfolgend wird die Erfindung noch näher anhand der Zeichnung beschrieben.

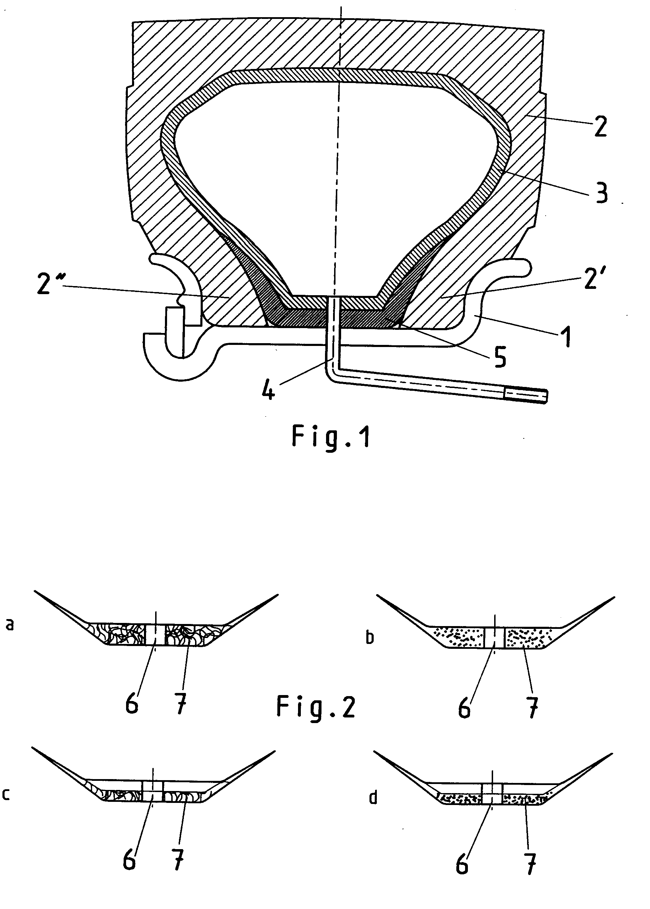

Fig. 1 zeigt im Schnitt einen auf eine Felge 1 montierten Reifen 2 mit Luftschlauch 3 und Ventilschaft 4. Das Felgenband 5 ist zwischen Luftschlauch 3, Felge 1 und Reifenwülsten 2', 2'' gebettet. Die Fig. 2 zeigt vier Querschnitte a-d durch vier erfindungsgemäße Felgenbänder im Ventilbereich. Das Ventilloch ist in jeder Abbildung mit der Bezugsziffer 6 dargestellt. Fig. 2a und Fig. 2b zeigen schematisch die erfindungsgemäß vorgesehenen Fäden 7 zur Verstärkung, welche im Fall Fig. 2a ungerichtet und im Fall Fig. 2b gerichtet (und zwar im rechten Winkel zur Schnittebene) vorliegen.

Die Fig. 2c und 2d zeigen einen zweischichtigen Aufbau des erfindungsgemäßen Felgenbandes, wobei die verstärkenden Fäden 7 nur in der der Felge näher liegenden Schicht vorgesehen sind.

Das erfindungsgemäße Felgenband kann wie nachfolgend beschrieben hergestellt werden.

Zunächst wird eine an sich bekannte Kautschuk-Rohmischung mittels eines Extruders zu einem Band mit trapezförmigem Querschnitt geformt ("Felgenbandrohling"). Die beiden Enden dieses Bandes werden über ein Segment, welches vorzugsweise zwischen 2 und 8 % des Umfanges des fertigen Felgenbandes ausmacht und den verstärkten Bereich bildet, miteinander verbunden und durch Vulkanisieren zu einem kreisförmigen elastischen Band geformt.

Zur Herstellung des genannten Segmentes werden Fäden, insbesondere Kordfaserschnitzel, zu einer Kautschuk-Rohmischung, welche zweckmäßigerweise die gleiche chemische Natur aufweist wie die Mischung des Felgenbandrohlings, beigemengt, die mit Fäden versehene Mischung wie oben beschrieben zu einem Band extrudiert und in entsprechende Länge geschnitten. Je nach dem ob die Kordfaserschnitzel in verfilztem Zustand oder lose der Kautschuk-Rohmischung beigemengt werden, liegen die Faserschnitzel in dem in Fig. 2a bzw. Fig. 2b gezeigten Zustand vor. Es hat sich gezeigt, daß Faserschnitzel durch den Extrusionsvorgang ausgerichtet werden, sofern sie in losem Zustand der Kautschuk-Rohmischung beigemengt werden.

Felgenbänder gemäß Fig. 2c und 2d werden hergestellt, indem der Felgenbandrohling zunächst über seine beiden Enden, d.h. ohne Einsetzen eines Segmentes, kreisförmig verbunden wird. Auf den Bereich des Ventilloches wird eine faserverstärkte Platte aus Kautschuk-Rohmischung gelegt und in der Vulkanisierpresse mit dem Felgenbandrohling verbunden. Beim Pressen unter den herkömmlichen Druck- und Temperaturbedingungen erfolgt ein Verfließen der Plattenmasse mit der Masse des Felgenbandrohlings.

Zweckmäßigerweise wird zum Zwecke des Gewichtausgleiches vom Felgenbandrohling im Bereich des Ventilloches an der der Felge abgekehrten Seite eine entsprechende Oberflächenschicht abgeschält.

## Patentansprüche

1. Felgenband für einen Fahrzeugreifen mit einem Luftschlauch, das zum Schutz des Luftschlauches zwischen diesem und dem Wulstbereich des Reifens bzw. zwischen Schlauch und Felge anbringbar ist und welches, mit Ausnahme des die Öffnung zur Aufnahme des Ventilschaftes aufweisenden Bandsegmentes, wo eine Verstärkung vorgesehen ist, ausschließlich aus unverstärktem Elastomer- bzw. Gummimaterial besteht, dadurch gekennzeichnet, daß das die Öffnung zur Aufnahme des Ventilschaftes aufweisende Bandsegment entweder zur Gänze aus einer mit geschnittenen Korden, Fasern oder Fäden (7), insbesondere gummierten Rayon- und/oder Nylonfäden, verstärkten Gummimischung besteht oder einseitig mit einer die Öffnung zur Aufnahme des Ventilschaftes umschließenden Schicht aus einer solchen Gummimischung versehen ist.

2. Felgenband nach Anspruch 1, dadurch gekennzeichnet, daß die geschnittenen Korde, Fasern oder Fäden (7) eine Länge zwischen 5 und 20 mm und einen Durchmesser zwischen 0,01 und 1 mm aufweisen.

3. Felgenband nach Anspruch 1 oder 2, dadurch gekennzeichnet, daß die geschnittenen Korde, Fasern oder Fäden (7) zumindest teilweise bezüglich einer Richtung ausgerichtet sind.

4. Felgenband nach einem der Ansprüche 1 bis 3, dadurch gekennzeichnet, daß der Anteil der geschnittenen Korde, Fasern oder Fäden (7) in der Gummimischung zwischen 10 und 50 Masseprozent, bezogen auf die Gesamtmasse dieser Gummimischung beträgt.

5. Felgenband nach einem der Ansprüche 1 bis 4, dadurch gekennzeichnet, daß das Bandsegment im Bereich der Öffnung zum Aufnehmen des Ventilschaftes zwischen 2 und 8 % des Gesamtumfanges des Felgenbandes einnimmt, wobei dieses Bandsegment eine Dicke aufweist, die bis zum 1,5-fachen der sonstigen Dicke des Felgenbandes beträgt.

6. Felgenband nach einem der Ansprüche 1 bis 5, dadurch gekennzeichnet, daß die Schicht aus der mit Korden, Fasern oder Fäden verstärkten Gummimischung der Felge benachbart angeordnet ist.

7. Verfahren zur Herstellung des Felgenbandes gemäß den Ansprüchen 1 bis 6, dadurch gekennzeichnet, daß eine Kautschuk-Rohmischung zu einem Band extrudiert und die beiden Enden dieses Bandes über ein bandförmiges Segment, welches ebenfalls aus einer Kautschuk-Rohmischung besteht und mit Korden, Fasern oder Fäden (7) versehen ist, unter Vulkanisierung und Formgebung verbunden werden.

8. Verfahren nach Anspruch 7, dadurch gekennzeichnet, daß ein bandförmiges Segment eingesetzt wird, in welchem die Korde, Fasern oder Fäden in gerichtetem Zustand vorliegen.

9. Verfahren zur Herstellung eines Felgenbandes gemäß Anspruch 6, dadurch gekennzeichnet, daß ein unvulkanisierter Felgenbandrohling im Bereich des Ventilloches mit einer Platte aus einer Kautschuk-Rohmischung, welche mit Korden, Fasern oder Fäden (7) verstärkt ist, abgedeckt und unter Vulkanisierung und Formgebung mit der Platte verbunden wird.

10. Verfahren nach Anspruch 9, dadurch gekennzeichnet, daß eine Platte eingesetzt wird, in welcher die Korde, Fasern oder Fäden in gerichtetem Zustand vorliegen.

## Claims

1. Rim strip for a vehicle tyre having an inner tube, which strip can be mounted between the inner tube and the bead region of the tyre, or respectively between the tube and rim, in order to protect the inner tube, and which strip is formed exclusively from non-reinforced elastomeric or rubber material, with the exception of the segment of the strip having the opening for receiving the valve stem where a reinforcement is provided, characterised in that the segment of the strip, which is provided with the opening for receiving the valve stem, is either formed totally from a rubber mixture reinforced with cut cords, fibres or filaments (7), more especially rubberised rayon and/or nylon filaments, or provided on one side with a layer of such a rubber mixture which surrounds the opening for receiving the valve stem.

2. Rim strip according to claim 1, characterised in that the cut cords, fibres or filaments (7) have a length of between 5 mm and 20 mm and a diameter of between 0.01 mm and 1 mm.

3. Rim strip according to claim 1 or 2, characterised in that the cut cords, fibres or filaments (7) are aligned at least partially in respect of one direction.

4. Rim strip according to one of claims 1 to 3, characterised in that the proportion of the cut cords, fibres or filaments (7) in the rubber mixture amounts to between 10 and 50 per cent by weight, relative to the total weight of this rubber mixture.

5. Rim strip according to one of claims 1 to 4, characterised in that the segment of the strip in the region of the opening for receiving the valve stem occupies between 2 % and 8 % of the total circumference of the rim strip, this segment of the strip having a thickness which is up to 1.5 times the other thickness of the rim strip.

6. Rim strip according to one of claims 1 to 5, characterised in that the layer of the rubber mixture reinforced with cords, fibres or filaments is disposed adjacent the rim.

7. Method of producing the rim strip according to claims 1 to 6, characterised in that an untreated rubber mixture is extruded to form a strip, and the two ends of this strip are joined by vulcanisation and shaping via a strip-like segment, which is also formed from an untreated rubber mixture and is provided with cords, fibres or filaments (7),

8. Method according to claim 7, characterised in that a strip-like segment is used, in which the cords, fibres or filaments are in their aligned positions.

9. Method of producing a rim strip according to claim 6, characterised in that an unvulcanised rim strip blank is covered in the region of the valve aperture with a plate formed from an untreated rubber mixture, which is reinforced with cords, fibres or filaments (7), and said blank is joined to the plate by vulcanisation and shaping.

10. Method according to claim 9, characterised in that a plate is used, in which the cords, fibres or filaments are in their aligned positions.

## Revendications

1. Bande de fond de jante pour un pneumatique de véhicule muni d'une chambre à air, ladite bande pouvant être installée, en vue de protéger la chambre à air, entre cette dernière et la zone du talon du pneumatique ou, respectivement, entre la chambre à air et la jante, et étant exclusivement constituée d'un élastomère ou d'un caoutchouc non renforcé, à l'exception du segment de bande qui présente l'orifice destiné à recevoir la tige de la valve, et dans lequel un renforcement est prévu, caractérisée par le fait que le segment de bande, présentant l'orifice destiné à recevoir la tige de la valve, consiste intégralement en un mélange de caoutchouc renforcé par des câbles, des fibres ou des fils (7) sectionnés, notamment des fils de rayonne et/ou de Nylon caoutchoutés, ou bien est pourvu, d'un côté, d'une couche en un tel mélange de caoutchouc qui entoure l'orifice destiné à recevoir la tige de la valve.

2. Bande de fond de jante selon la revendication 1, caractérisée par le fait que les câbles, les fibres ou les fils (7) sectionnés présentent une longueur comprise entre 5 et 20 mm et un diamètre compris entre 0,01 et 1 mm.

3. Bande de fond de jante selon la revendication 1 ou 2, caractérisée par le fait que les câbles, les fibres ou les fils (7) sectionnés sont alignés, au moins partiellement, par rapport à une direction.

4. Bande de fond de jante selon l'une des revendications 1 à 3, caractérisée par le fait que la part des câbles, des fibres ou des fils (7) sectionnés, dans le mélange de caoutchouc, représente entre 10 et 50 pour cent en poids vis-à-vis du poids total de ce mélange de caoutchouc.

5. Bande de fond de jante selon l'une des revendications 1 à 4, caractérisée par le fait que le segment de bande occupe entre 2 et 8 % du pourtour total de la bande de fond de jante dans la région de l'orifice destiné à recevoir la tige de la valve, ce segment de bande possédant une épaisseur qui mesure jusqu'à 1,5 fois l'épaisseur restante de la bande de fond de jante.

6. Bande de fond de jante selon l'une des revendications 1 à 5, caractérisée par le fait que la couche, constituée du mélange de caoutchouc renforcé par des câbles, des fibres ou des fils, est disposée au voisinage de la jante.

7. Procédé de fabrication de la bande de fond de jante conforme aux revendications 1 à 6, caractérisé par le fait qu'un mélange brut de caoutchouc est extrudé en une bande et les deux extrémités de cette bande sont reliées, avec vulcanisation et mise en forme, par l'intermédiaire d'un segment en forme de bande qui est semblablement constitué d'un mélange brut de caoutchouc, et est pourvu de câbles, de fibres ou de fils (7).

8. Procédé selon la revendication 7, caractérisé par le fait qu'on utilise un segment en forme de bande dans lequel les câbles, les fibres ou les fils se présentent à l'état dressé.

9. Procédé de fabrication d'une bande de fond de jante conforme à la revendication 6, caractérisé par le fait qu'une ébauche non vulcanisée de bande de fond de jante est recouverte, dans la région du trou de passage de la valve, par une plaque en un mélange brut de caoutchouc renforcé par des câbles, des fibres ou des fils (7), et est reliée à la plaque avec vulcanisation et mise en forme.

10. Procédé selon la revendication 9, caractérisé par le fait qu'on utilise une plaque dans laquelle les câbles, les fibres ou les fils se présentent à l'état dressé.
